# EUROPÄISCHE PATENTSCHRIFT

(11) **EP 1 899 438 B1**
(45) Veröffentlichungstag und Bekanntmachung des Hinweises auf die Patenterteilung: **11.04.2012**
(21) Anmeldenummer: 06763872.6
(22) Anmeldetag: 26.06.2006
(51) Int. Cl.: C10L 1/02, C10L 1/198, C10L 1/185, C10L 10/12, C10L 1/14, C10L 10/02

(54) **BIODIESELKRAFTSTOFFGEMISCH ENTHALTEND POLYOXYMETHYLENDIALKYLETHER**
BIODIESEL FUEL MIXTURE CONTAINING POLYOXYMETHYLENE DIALKYL ETHER
MELANGE DE CARBURANT BIODIESEL CONTENANT DU POLYOXYMETHYLENE-DIALKYLETHER

(30) Priorität: 29.06.2005 DE 102005030282
(43) Veröffentlichungstag der Anmeldung: 19.03.2008
(73) Patentinhaber: Ströfer, Eckhard, 68163 Mannheim (DE)
(72) Erfinder: TEBBEN, Gerd-Dieter, 68159 Mannheim (DE); SCHELLING, Heiner, 67281 Kirchheim (DE); STRÖFER, Eckhard, 68163 Mannheim (DE); PINKOS, Rolf, 67098 Bad Dürkheim (DE); HAUNERT, Andrea, 68163 Mannheim (DE); EIERMANN, Matthias, 67117 Limburgerhof (DE); KARL, Jörn, 67063 Ludwigshafen (DE)
(74) Vertreter: Isenbruck, Günter
(86) Internationale Anmeldenummer: PCT/EP2006/063531
(87) Internationale Veröffentlichungsnummer: WO 2007/000428

(56) Entgegenhaltungen:
- EP-A- 1 070 755
- WO-A-99/02626
- FR-A- 2 492 402
- GB-A- 603 872

## Beschreibung

Die Erfindung betrifft ein Biodieselkraftstoffgemisch enthaltend Polyoxymethylendialkylether.

Seit vielen Jahren ist die Industrie bemüht, alternative Energiequellen zu erschließen, welche nicht fossilen Ursprungs sind, sowie sogenannte erneuerbare Rohstoffe verfügbar zu machen. Letztere umfassen Pflanzenöle, d.h. Fettsäureester, üblicherweise Triglyceride, welche im Allgemeinen als bioabbaubar und für die Umwelt unbedenklich eingestuft werden können. Rapsöl kann als Prototyp derartiger Pflanzenöle angesehen werden. Im Allgemeinen enthalten derartige Öle die Glyceride von einer Anzahl von Säuren, wobei die Säuren mit Art und Herkunft des Pflanzenöls variieren können, und zusätzlich gegebenenfalls Phosphoglycide. Solche Öle können nach bekannten Verfahren erhalten werden. Aus den Pflanzenölen können durch Umesterung die Alkylester, beispielsweise die Methylester, der in den Glyceriden gebundenen Fettsäuren erhalten werden.

FR-A 2 492 402 beschreibt eine Kraftstoffzusammensetzung enthaltend einen oder mehrere Fettsäureester tierischen oder pflanzlichen Ursprungs der allgemeinen Formel R¹-COOR², worin R¹ ein im Wesentlichen linearer gesättigter oder ungesättigter aliphatischer Rest mit 5 bis 23 C-Atomen und R² ein linearer oder verzweigter, gesättigter oder ungesättigter aliphatischer Rest mit 1 bis 12 C-Atomen sind. Derartige Kraftstoffzusammensetzungen werden als geeignet für die Verwendung in Dieselmotoren beschrieben, da sie eine Cetanzahl aufweisen, welche näherungsweise der Cetanzahl von herkömmlichen Dieselkraftstoffen, welche aus Mineralölen gewonnen werden, entspricht.

Der Hauptvorteil von Biodiesel als erneuerbarem Kraftstoff ist die Reduktion der Netto-CO₂-Emission. Außerdem verringern sich die Auspuffemissionen von Schwefeloxiden, Partikeln und Kohlenmonoxid. Die Stickoxid-Emissionen können dagegen leicht erhöht sein. So kann angenommen werden, dass die bei der Verbrennung von Biodiesel freiwerdende CO₂-Menge (ca. 2,4 t/t Biodiesel) durch nachwachsende Pflanzen, aus denen wiederum Pflanzenöle für Biodiesel gewonnen werden, wieder assimiliert wird, so dass der Netto-CO₂-Ausstoß bei nahe 0 liegt. Biodiesel ist außerdem praktisch schwefelfrei (Schwefelgehalt zwischen 0 und 0,0024 ppm, verglichen mit bis zu 350 ppm Schwefel in herkömmlichem fossilem Dieselkraftstoff). Die NOx-Emissionen aus reinem Biodiesel liegen zwar im Durchschnitt um 6 % über denjenigen aus Diesel fossilen Ursprungs, doch ermöglicht das Fehlen von Schwefel Techniken zur NOx-Reduktion, welche in Verbindung mit herkömmlichem fossilem Diesel nicht angewendet werden können. Die im Biodiesel enthaltenen O-xygenate verbessern die Verbrennung und das Emissionsprofil, so dass gegenüber fossilem Dieselkraftstoff etwa 20 % weniger Kohlenmonoxid gebildet wird. Auch die Partikelemissionen aus Biodiesel sind bedeutend niedriger und liegen um 40 % oder mehr unterhalb derjenigen von herkömmlichem fossilem Diesel. Die Bioabbaubarkeit von Biodiesel ist gegenüber fossilem Diesel stark erhöht.

Der Energiegehalt von Biodiesel beträgt immerhin 92 % desjenigen von fossilem Diesel, so dass ca. 1,1 I Biodiesel 1 I fossilen Dieselkraftstoff ersetzen.

Zukünftige europäische Dieselspezifikationen zielen deutlich in Richtung höherer Cetanzahlen, während der Gehalt an Schwefel und polyaromatischen Kohlenwasserstoffen verringert werden soll.

Es ist bekannt, durch Zumischung linearer Ether die Cetanzahl von Dieselkraftstoffen zu erhöhen. Daneben verbessern sich die Kälteeigenschaften des Kraftstoffs, und durch die Verdünnung wird der Anteil an aromatischen Kohlenwasserstoffen und Schwefel vermindert. Die Ether haben auch einen positiven Effekt auf die Emissionen. Die hohe Cetanzahl führt zu einem geringeren Ausstoß von Kohlenwasserstoffen und Kohlenmonoxid. Der hohe Sauerstoffgehalt im Ether führt darüber hinaus zu einer Verminderung von Russpartikeln im Abgas.

EP-A 1 070 755 offenbart ein Dieselkraftstoffgemisch mit einer von Cetanzahl > 40 aus einem typischen Dieselölschnitt und 1 bis 20 Vol.-% Polyoxymethylendialkylethern. Durch den Zusatz der Polyoxymethylendialkylether wird die Cetanzahl von 48 auf einen Wert zwischen 63 und 100 angehoben.

Aufgabe der Erfindung ist es, ein auf Biodiesel basierendes Dieselkraftstoffgemisch mit einer hohen Cetanzahl und gutem Emissionsprofil bereitzustellen.

Gelöst wird die Aufgabe durch ein Biodieselkraftstoffgemisch mit einer Cetanzahl von > 40 enthaltend
a) 5 bis 90 Gew.-% Biodiesel,
b) 0 bis 94 Gew.-% Dieselöl fossilen Ursprungs,
c) 1 bis 20 Gew.-% Polyoxyalkylendialkylether der Formel

   RO(CH₂O)ₙR

   worin R eine Alkylgruppe mit 1 bis 10 C-Atomen ist und n = 2 bis 10 ist, und
d) 0 bis 5 Gew.-% weitere Additive.

Als Komponente a) enthält das erfindungsgemäße Biodieselkraftstoffgemisch 5 bis 90 Gew.-%, vorzugsweise 5 bis 50 Gew.-% und besonders bevorzugt 10 bis 50 Gew.-% Biodiesel. Biodiesel weist im Allgemeinen eine Viskosität bei 40 °C von 1,9 bis 6,5, vorzugsweise 3,5 bis 5,0 cSt, einen Schwefelgehalt von maximal 0,05 Gew.-%, vorzugsweise 0,01 Gew.-%, eine Cetanzahl von mindestens 40, vorzugsweise mindestens 49, und eine Säurezahl von bis zu 0,80, vorzugsweise von bis zu 0,50 mg KOH/g auf. Biodiesel besteht im Allgemeinen aus Fettsäureestern der allgemeinen Formel R¹-COOR², worin R¹ ein im Wesentlichen linearer, gesättigter oder ungesättigter aliphatischer Rest mit 5 bis 23 C-Atomen und R² ein linearer oder verzweigter, gesättigter oder ungesättigter aliphatischer Rest mit 1 bis 12 C-Atomen ist. Vorzugsweise leiten sich die im Biodiesel enthaltenen Fettsäureester von linearen, gesättigten oder ungesättigten Fettsäuren R¹COOH mit 11 bis 23 C-Atomen im Rest R¹ ab, insbesondere von gesättigten Fettsäuren wie Laurinsäure, Myristinsäure, Palmitinsäure, Stearinsäure, Arachidinsäure, Behensäure und Lignocerinsäure, einfach ethylenisch ungesättigten Fettsäuren wie Lauroleinsäure, Myristoleinsäure, Palmitoleinsäure, Ölsäure, Gadoleinsäure und Erucasäure, sowie zwei oder mehrfach ethylenisch ungesättigte Fettsäuren wie Linolsäure und Linolensäure. Die Fettsäuren der im Biodiesel enthaltenen Fettsäureester werden aus pflanzlichen oder tierischen Fetten gewonnen. Pflanzliche Fette sind beispielsweise Rapsöl, Sonnenblumenöl, Coprahöl, Maisöl, Baumwollsamenöl, Sojaöl und Erdnussöl. Geeignete Fette tierischen Ursprungs sind beispielsweise Schweineschmalz oder Rindertalg.

Die Alkoholkomponente der in Biodiesel enthaltenen Ester ist vorzugsweise ausgewählt aus Methanol, Ethanol, n-Propanol, Isopropanol, n-Butanol, Isobutanol, Ethyl-2-hexanol oder Dodecanol. Die Fettsäureester werden vorzugsweise durch Umesterung mit dem Alkohol R²OH aus den in den natürlichen Fetten pflanzlichen oder tierischen Ursprungs enthaltenen Glyceriden erhalten.

Als Komponente b) enthält das erfindungsgemäße Biodieselkraftstoffgemisch herkömmliches Dieselöl fossilen Ursprungs. Diesel repräsentiert den Schwersiederanteil der Mitteldestillate von Mineralöl. Typische Dieselöl-Schnitte haben einen Siedepunkt im Bereich von 150 bis 380 °C, vorzugsweise von 200 bis 350 °C und eine Dichte von 0,76 bis 0,935 g/ml bei 15 °C.

Als Komponente c) enthält das erfindungsgemäße Biodieselkraftstoffgemisch 1 bis 20 Gew.-%, bevorzugt 3 bis 11 Gew.-%, besonders bevorzugt 4 bis 11 Gew.-% Polyoxymethylendialkylether. Von diesen sind die Dimethylether und Diethylether bevorzugt. Bevorzugt sind weiterhin Polyoxymethylendialkylether mit n = 3, 4 oder 5 Oxymethylen-Einheiten, sowie deren Gemische. Besonders bevorzugt sind Polyoxymethylendimethylether mit 3, 4 oder 5 Oxymethylen-Einheiten und deren Gemische. Insbesondere bevorzugt sind Polyoxymethylendimethylether mit n = 3 oder 4 Oxymethylen-Einheiten und deren Gemische, speziell bevorzugt ist Tetraoxymethylendimethylether (n=4).

Gegenstand der Erfindung ist auch die Verwendung der Polyoxymethylendialkylether als Additive für Biodieselkraftstoffgemische, welche mindestens 1 Gew.-% Biodiesel enthalten, zur Erhöhung der Cetanzahl.

Die Polyoxymethylendialkylether c) können, wie in EP-A 1 070 755 beschrieben, durch Umsetzen des entsprechenden Alkohols, vorzugsweise Methanol, mit Formaldehyd in Gegenwart von sauren Katalysatoren hergestellt werden.

Ein besonders vorteilhaftes Verfahren zur Herstellung von Polyoxymethylendimethylethern, welche als Biodieselkraftstoffadditive c) besonders gut geeignet sind, insbesondere der Polyoxymethylendimethylether mit n = 3 und 4 (Trimer, Tetramer), geht von Methylal (n = 1) und Trioxan aus. Diese werden in einen Reaktor eingespeist und in Gegenwart eines sauren Katalysators umgesetzt, wobei die durch Methylal, Trioxan und/oder den Katalysator in das Reaktionsgemisch eingebrachte Wassermenge < 1 Gew.-%, bezogen auf das Reaktionsgemisch, beträgt.

Bei der Umsetzung von Methylal mit Trioxan zu den Polyoxymethylendimethylethern wird kein Wasser als Nebenprodukt gebildet. Die Umsetzung wird im Allgemeinen bei einer Temperatur von 50 bis 200 °C, vorzugsweise 90 bis 150 °C, und einem Druck von 1 bis 20 bar, vorzugsweise 2 bis 10 bar durchgeführt. Das Molverhältnis Methylal : Trioxan beträgt im Allgemeinen 0,1 bis 10, vorzugsweise 0,5 bis 5.

Der saure Katalysator kann ein homogener oder heterogener saurer Katalysator sein. Geeignete saure Katalysatoren sind Mineralsäuren wie weitgehend wasserfreie Schwefelsäure, Sulfonsäuren wie Trifluormethansulfonsäure und para-Toluolsulfonsäure, Heteropolysäuren, saure Ionenaustauscherharze, Zeolithe, Aluminosilikate, Siliciumdioxid, Aluminiumoxid, Titandioxid und Zirkondioxid. Oxidische Katalysatoren können, um deren Säurestärke zu erhöhen, mit Sulfat- oder Phosphat-Gruppen dotiert sein, im Allgemeinen in Mengen von 0,05 bis 10 Gew.-%. Die Umsetzung kann in einem Rührkesselreaktor (CSTR) oder einem Rohrreaktor durchgeführt werden. Wird ein heterogener Katalysator eingesetzt, ist ein Festbettreaktor bevorzugt. Wird ein Katalysator-Festbett verwendet, kann das Produktgemisch anschließend mit einem Anionenaustauscherharz in Kontakt gebracht werden, um ein im Wesentlichen säurefreies Produktgemisch zu erhalten.

Die durch Methylal und Trioxan sowie durch den Katalysator eingebrachte Wassermenge beträgt insgesamt < 1 Gew.-%, bevorzugt < 0,5 Gew.-%, besonders bevorzugt < 0,2 Gew.-% und insbesondere < 0,1 Gew.-%, bezogen auf das Reaktionsgemisch aus Methylal, Trioxan und den Katalysator. Hierzu werden praktisch wasserfreies Trioxan und Methylal eingesetzt sowie die gegebenenfalls durch den Katalysator eingebrachte entsprechend Wassermenge begrenzt. Die in Gegenwart von Wasser aus bereits gebildetem Polyoxymethylendimethylether durch Hydrolyse gebildeten Halbacetale (Monoether) beziehungsweise Polyoxymethylenglykole weisen einen vergleichbaren Siedepunkt wie die Polyoxymethylendimethylether auf, wodurch eine Abtrennung der Polyoxymethylendimethylether von diesen Nebenprodukten erschwert wird.

Um gezielt Polyoxymethylendimethylether mit n = 3 und n = 4 (Trimer, Tetramer) zu erhalten, wird aus dem Produktgemisch der Umsetzung von Methylal mit Trioxan eine Fraktion enthaltend das Trimere und Tetramere abgetrennt und werden nicht umgesetztes Methylal, Trioxan und Polyoxymethylendimethylether mit n < 3 in die sauer katalysierte Umsetzung zurückgeführt. In einer weiteren Ausführungsform des erfindungsgemäßen Verfahrens werden zusätzlich auch die Polyoxymethylendimethylether mit n > 4 in die Umsetzung zurückgeführt. Durch die Rückführung wird besonders viel Trimer und Tetramer erhalten.

In einer besonders bevorzugten Ausführungsform wird aus dem Produktgemisch der sauer katalysierten Umsetzung von Methylal mit Trioxan eine erste Fraktion enthaltend Methylal, eine zweite Fraktion enthaltend das Dimer (n = 2) und Trioxan, eine dritte Fraktion enthaltend das Trimere und Tetramere (n = 3, 4) und eine vierte Fraktion enthaltend das Pentamere und höhere Homologe (n > 4) gewonnen. Hierbei ist es insbesondere bevorzugt, die Auftrennung des Produktgemischs der sauer katalysierten Umsetzung von Methylal mit Trioxan in drei hintereinander geschalteten Destillationskolonnen durchzuführen, wobei die erste Fraktion in einer Destillationskolonne von dem Produktgemisch der Umsetzung abgetrennt wird, aus dem verbleibenden Gemisch in einer zweiten Destillationskolonne die zweite Fraktion abgetrennt wird und das verbleibende Gemisch in einer dritten Destillationskolonne in die dritte und die vierte Fraktion aufgetrennt wird. Hierbei kann die erste Destillationskolonne beispielsweise bei einem Druck von 0,5 bis 1,5 bar, die zweite Destillationskolonne beispielsweise bei einem Druck von 0,05 bis 1 bar und die dritte Destillationskolonne beispielsweise bei einem Druck von 0,001 bis 0,5 bar betrieben werden. Vorzugsweise werden die erste und die zweite Fraktion, besonders bevorzugt zusätzlich auch die vierte Fraktion in die Umsetzung zurückgeführt.

Wird ein homogener Katalysator, beispielsweise eine Mineralsäure oder eine Sulfonsäure eingesetzt, so verbleibt dieser in der vierten Fraktion und wird mit dieser in die sauer katalysierte Umsetzung zurückgeführt.

Es ist allgemein bekannt, dass Acetale, zu denen auch die vorliegend eingesetzten Polyoxymethylendialkylether gehören, unter sauren Bedingungen gespalten werden. Biodiesel weist eine Säurezahl von im Allgemeinen mindestens 0,1 mg KOH/g und bis zu 0,8 mg KOH/g (nach US-Norm) beziehungsweise von bis zu 0,5 mg KOH/g (nach DIN 51606) auf. Durch eine Erhöhung des Wasseranteils während der Lagerung oder während des Verbrauchs kann die Säurezahl durch die Verschiebung des chemischen Gleichgewichts von Fettsäureestern zu Fettsäuren weiter ansteigen. Die sauren Eigenschaften des Biodiesels lassen erwarten, dass die Polyoxymethylendialkylether in Biodiesel nicht stabil sind und in Formaldehyd und Methanol gespalten werden. Es wurde jedoch überraschenderweise gefunden, dass dies nicht der Fall ist und Polyoxymethylendimethylether in Biodiesel und Biodiesel/Diesel-Gemischen trotz der sauren Eigenschaften des Biodiesels vollständig stabil sind.

Als Komponente d) können die erfindungsgemäßen Biodieselkraftstoffgemische 0 bis 5 Gew.-%, vorzugsweise 0 bis 1 Gew.-% weitere Additive enthalten. Übliche weitere Additive sind Cetanzahlerhöher, welche in Mengen von üblicherweise bis zu 1 Gew.-% enthalten sein können.

Das erfindungsgemäße Biodieselkraftstoffgemisch weist eine Cetanzahl von > 40, im Allgemeinen von > 45, vorzugsweise von > 50, besonders bevorzugt von > 52 auf.

Ein bevorzugtes erfindungsgemäßes Biodieselgemisch enthält
a) 5 bis 90 Gew.-% Biodiesel,
b) 6 bis 92 Gew.-% Dieselöl fossilen Ursprungs,
c) 3 bis 11 Gew.-% Polyoxyalkylendialkylether, und
d) 0 bis 1 Gew.-% Cetanzahlerhöher.

Die Erfindung wird durch das nachfolgende Beispiel näher erläutert.

### Beispiele

### Beispiel 1:

150 g Biodiesel (connediesel^{®} CD 99, Säurezahl = 0,12 mg KOH/g) und 20 g Tetraoxymethylendimethylether H₃CO(CH₂O)₄CH₃ wurden bei 25 °C gerührt. Der Gehalt an H₃CO(CH₂O)₄CH₃ wurde in regelmäßigen Abständen gaschromatographisch bestimmt. Über die gesamte Versuchsdauer von 12 Tagen wurde keine Abnahme des H₃CO(CH₂O)₄CH₃-Gehaltes festgestellt.

### Beispiel 2:

150 g Diesel und 20 g Tetraoxymethylendimethylether H₃CO(CH₂O)₄CH₃ wurden bei 25 °C gerührt. Der Gehalt an H₃CO(CH₂O)₄CH₃ wurde in regelmäßigen Abständen gaschromatographisch bestimmt. Über die gesamte Versuchsdauer von 12 Tagen wurde keine Abnahme des H₃CO(CH₂O)₄CH₃-Gehaltes festgestellt.

## Patentansprüche

1. Biodieselkraftstoffgemisch mit einer Cetanzahl von > 40 enthaltend
a) 5 bis 90 Gew.-% Biodiesel,
b) 0 bis 94 Gew.-% Dieselöl fossilen Ursprungs,
c) 1 bis 20 Gew.-% Polyoxyalkylendialkylether der Formel
RO(CH₂O)ₙR
worin R eine Alkylgruppe mit 1 bis 10 C-Atomen ist und n = 2 bis 10 ist, und
d) 0 bis 5 Gew.-% weitere Additive.

2. Biodieselkraftstoffgemisch nach Anspruch 1, enthaltend als Komponente c) Polyoxymethylendialkylether mit 3, 4 oder 5 Oxymethylen-Einheiten oder deren Gemische.

3. Biodieselkraftstoffgemisch nach Anspruch 1 oder 2, enthaltend als Komponente c) Polyoxymethylendimethylether.

4. Biodieselkraftstoffgemisch nach einem der Ansprüche 1 bis 3, enthaltend
a) 5 bis 90.Gew.-% Biodiesel,
b) 6 bis 92 Gew.-% Dieselöl fossilen Ursprungs,
c) 3 bis 11 Gew.-% Polyoxyalkylendialkylether, und
d) 0 bis 1 Gew.-% Cetanzahlerhöher

5. Biodieselkraftstoffgemisch nach einem der Ansprüche 1 bis 4 mit einer Cetanzahl > 45

6. Verwendung von Polyoxymethylendialkylethern der allgemeinen Formel
RO(CH₂O)ₙR
worin R eine Alkylgruppe mit 1 bis 10 C-Atomen ist und n = 2 bis 10 ist als Additiv in Biodieselkraftstoffgemischen mit mindestens 1 Gew.-% Biodiesel zur Erhöhung der Cetanzahl.

## Claims

1. A biodiesel fuel mixture having a cetane number of > 40, comprising
a) from 5 to 90% by weight of biodiesel,
b) from 0 to 94% by weight of diesel oil of fossil origin,
c) from 1 to 20% by weight of polyoxyalkylene dialkyl ether of the formula
RO(CH₂O)ₙR
in which R is an alkyl group having from 1 to 10 carbon atoms and n = from 2 to 10, and
d) from 0 to 5% by weight of further additives.

2. The biodiesel fuel mixture according to claim 1, comprising, as component c), polyoxymethylene dialkyl ether with 3, 4 or 5 oxymethylene units or mixtures thereof.

3. The biodiesel fuel mixture according to claim 1 or 2, comprising, as component c), polyoxymethylene dimethyl ether.

4. The biodiesel fuel mixture according to any of claims 1 to 3, comprising
a) from 5 to 90% by weight of biodiesel
b) from 6 to 92% by weight of diesel oil of fossil origin
c) from 3 to 11% by weight of polyoxyalkylene dialkyl ether, and
d) from 0 to 1% by weight of cetane number improver.

5. The biodiesel fuel mixture according to any of claims 1 to 4 with a cetane number of > 45.

6. The use of polyoxymethylene dialkyl ethers of the general formula
RO(CH₂O)ₙR
in which R is an alkyl group having from 1 to 10 carbon atoms and n = from 2 to 10 as an additive in biodiesel fuel mixtures with at least 1% by weight of biodiesel for increasing the cetane number.

## Revendications

1. Mélange de carburants contenant du biodiesel, ayant un indice de cétane de > 40, qui contient
a) 5 à 90 % en poids de biodiesel,
b) 0 à 94 % en poids de gazole d'origine fossile,
c) 1 à 20 % en poids de polyoxyalkylènedialkyléther de formule
RO(CH₂O)ₙR
dans laquelle R est un groupe alkyle ayant de 1 à 10 atomes de carbone et n = 2 à 10, et
d) 0 à 5 % en poids d'autres additifs.

2. Mélange de carburants contenant du biodiesel selon la revendication 1, qui contient en tant que composant c) un polyoxyméthylènedialkyléther comportant 3, 4 ou 5 unités oxyméthylène ou des mélanges de tels composés.

3. Mélange de carburants contenant du biodiesel selon la revendication 1 ou 2, qui contient en tant que composant c) du polyoxyméthylènediméthyléther.

4. Mélange de carburants contenant du biodiesel selon l'une quelconque des revendications 1 à 3, qui contient
a) 5 à 90 % en poids de biodiesel,
b) 6 à 92 % en poids de gazole d'origine fossile,
c) 3 à 11 % en poids de polyoxyalkylènedialkyléther, et
d) 0 à 1 % en poids d'agent augmentant l'indice de cétane.

5. Mélange de carburants contenant du biodiesel selon l'une quelconque des revendications 1 à 4, ayant un indice de cétane > 45.

6. Utilisation de polyoxyméthylènedialkyléthers de formule générale
RO(CH₂O)ₙR
dans laquelle R est un groupe alkyle ayant de 1 à 10 atomes de carbone et n = 2 à 10,
en tant qu'additif dans des mélanges de carburants contenant du biodiesel, qui comportent au moins 1 % de biodiesel, pour l'augmentation de l'indice de cétane.
